# EUROPÄISCHE PATENTSCHRIFT

(11) **EP 2 939 951 B1**
(45) Veröffentlichungstag und Bekanntmachung des Hinweises auf die Patenterteilung: **13.07.2016**
(21) Anmeldenummer: 14166904.4
(22) Anmeldetag: 02.05.2014
(51) Int. Cl.: B65D 85/672, F16F 15/32, B65D 83/04

(54) **Behälter zur Aufnahme einer Auswuchtgewicht-Rolle**
Container for holding a balancing weight roller
Récipient destiné à la réception d'un rouleau de poids d'équilibrage

(43) Veröffentlichungstag der Anmeldung: 04.11.2015
(73) Patentinhaber: WEGMANN automotive GmbH & Co. KG, 97209 Veitshöchheim (DE)
(72) Erfinder: Vogler, Markus, 97074 Würzburg (DE)
(74) Vertreter: Lohr, Georg

(56) Entgegenhaltungen:
- US-B1- 7 981 227

## Beschreibung

### Technisches Gebiet

Die Erfindung betrifft einen Behälter zur Aufnahme eines mit Auswuchtgewichten bestückten, aufgerollten Bandes - nachfolgend als Gurt bezeichnet - und zur Ausgabe desselben an einen Transport- und Ablängmechanismus, wobei der Behälter als im wesentlichen allseitig geschlossene Kassette mit zwei beabstandeten, die Gurtrolle zwischen sich aufnehmenden Seitenwänden sowie einer diese miteinander verbindenden, mit einer Ausgabeöffnung für den Durchtritt des Gurtes vorgesehenen Umfangswandung ausgebildet ist.

### Stand der Technik

Behälter der oben beschriebenen Art dienen einerseits als Transportbehälter, andererseits bilden sie insbesondere beispielsweise in automatischen Auswuchtanlagen für die Großfertigung von Automobilen ein Magazin zum Halten und zum Ausgeben der Auswuchtgewicht-Gurte an einen Transport- und Ablängmechanismus, in welchem jeweils ein für das Auswuchten eines Rades vorgesehener, mit der erforderlichen Anzahl von Auswuchtgewichten bestückter Gurtabschnitt für die Weiterverarbeitung herausgezogen und abgetrennt wird. Es hat sich gezeigt, dass insbesondere bei aufrechtstehender Kassette mit in deren oberem Bereich angeordneter Ausgabeöffnung dann, wenn das außerhalb der Kassette befindliche Gurtende nicht festgehalten wird, die Gurtrolle die Tendenz hat, sich entgegen der beim Herausziehen eines Gurtabschnittes stattfindenden Vorschubdrehrichtung rückwärts zu drehen und das freie Gurtende in die Kassette zurückzuziehen, wobei es im allgemeinen nicht möglich ist, das Gurtende wieder zutage zu fördern, ohne die Kassette zu öffnen, d.h. gegebenenfalls zu zerstören.

Aus der EP 1477 703 A2, auf dem der Oberbegriff des Anspruchs 1 basiert, und US 3 960 409 sind Behälter der eingangs genannten Art mit aufrechtstehenden Kassetten bekannt, bei denen jedoch die Ausgabeöffnung jeweils im unteren Bereich der Kassette ausgebildet ist, so dass der oben beschriebene nachteilige Effekt nicht auftritt. Diese Behälter haben jedoch den Nachteil, dass die Gurtrolle mit ihrem nicht unerheblichen Gewicht jeweils auf das zur Ausgabeöffnung geführte freie Gurtende und dieses gegen die untere Umfangswand drückt, so dass vor allem bei noch voller Gurtrolle ein erheblicher Widerstand gegen die Förderbewegung des Gurtes entsteht.

Die DE 201 04 923 U1 zeigt bereits einen Behälter der eingangs genannten Art mit im oberen Bereich der aufrecht stehenden Kassette angeordneter Ausgabeöffnung. Dabei bleibt das Gurtende während des Betriebes, d.h. auch nach Abtrennen eines Gurtabschnittes ständig zwischen zwei Vorschubwalzen geklemmt und festgehalten, so dass es zumindest während dieser Betriebsphase auch bei einer eventuellen Rückwärtsdrehung der Gurtrolle nicht in die Kassette gezogen werden kann.

### Darstellung der Erfindung

Es ist die Aufgabe der vorliegenden Erfindung, eine Kassette der eingangs genannten Art so zu verbessern, dass, unabhängig von ihrer Stellung und Lage im Raum, ein Zurückgleiten des freien Gurtendes auf einfache Weise, d.h. also auch ohne dass es in einem Vorschubmechanismus oder dergleichen festgehalten wird, sicher verhindert wird.

Diese Aufgabe ist erfindungsgemäß dadurch gelöst, dass an der Innenseite wenigstens einer der Seitenwände der Kassette wenigstens eine an dem Gurt bzw. der Gurtrolle anliegende, schräg gegen eine Rückwärtsbewegung des Gurtes bzw. eine Rückwärtsdrehung der Gurtrolle sich einspreizende Bremslasche ausgebildet ist.

Jede der Bremslaschen wirkt unabhängig von der jeweiligen Gewichtsverteilung der Gurtrolle in der Kassette bzw. von der Lage der Kassette im Raum sowie insbesondere unabhängig davon, ob das Gurtende von einer nachgeordneten Einrichtung gehalten wird, bremsend auf die Gurtrolle bzw. das freie Gurtende, so dass ein Zurückziehen bzw. Zurückfallen dieses Gurtendes in die Kassette wirkungsvoll vermieden wird.

Gemäß einer bevorzugten Ausgestaltung der Erfindung ist vorgesehen, dass an einer der Seitenwände der Kassette zwei bezüglich der Achse der Gurtrolle sich etwa diametral gegenüberliegende, im wesentlichen radial ausgerichtete, an einer Seitenflanke der Gurtrolle anliegende Bremslaschen angeordnet sind. Auf diese Weise wird im wesentlichen der gesamte Durchmesser der Seitenflanke der Gurtrolle für das Abbremsen derselben genutzt. Wie anhand eines Ausführungsbeispiels gezeigt wird, kann auf diese Weise auch das von der Gurtrolle teilweise abgewickelte, zur Ausgabeöffnung geführte freie Gurtende erfasst werden.

Die Kassette ist gemäß der Erfindung vorzugsweise aus einem Kartonmaterial hergestellt, wobei die jeweilige Bremslasche durch Ausstanzen und Herausklappen aus der Ebene der jeweiligen Seitenwand gebildet ist. Kartonmaterial ist einfach zu bearbeiten, preiswert und leicht, so dass es zu dem von der Gurtrolle und dem zugeordneten Behälter gebildeten Gesamtgewicht nicht wesentlich beiträgt.

Die Erfindung sieht vor, dass die Kassette aus einem einzigen Kartonzuschnitt gebildet ist, umfassend eine eine erste der Seitenwände bildende, im wesentlichen rechteckige Basisfläche, an den Außenkanten der Basisfläche jeweils anschließende, die Umfangswandung bildende Flächenabschnitte, und an den Außenkanten dieser Flächenabschnitte anschließende, die zweite Seitenfläche bildende Flächenelemente. Die Kassette wird dann in an sich bekannter Weise durch Falten und Verkleben der Flächenabschnitte und Flächenelemente gebildet, wie anhand des Ausführungsbeispiels im einzelnen dargelegt wird.

Um die Gurtrolle in der Kassette weitgehend zentral zu halten, ist erfindungsgemäß weiter vorgesehen, dass an der Innenseite der Basisfläche mittig ein als Nabe für die Gurtrolle dienender, kreisrunder Kartonzylinder mit einer im wesentlichen der Breite des Gurtes entsprechenden Dicke (Höhe) angeordnet ist. Diese Nabe bewirkt, dass die Gurtrolle auch bei abnehmendem Gurtrollendurchmesser in der Kassette zentriert bleibt und nicht auf der unteren Umfangswandung aufliegt, wo sie eine erhebliche, das Ausziehen des Gurtes erhöhende Reibung verursachen würde.

Gemäß einer weiteren Ausgestaltung der Erfindung ist vorgesehen, dass die Basisfläche im Bereich einer ihrer Ecken abgeschrägt ist, und dass in dem zugeordneten Flächenabschnitt für die Umfangswandung die Ausgabeöffnung für den Durchtritt des Gurtes ausgebildet ist. Auf diese Weise kann der Gurt im wesentlichen horizontal aus der Kassette herausbewegt werden, ohne an der Umfangswandung anzuliegen, wie das Ausführungsbeispiel zeigt.

Eine erfindungsgemäße Ausgestaltung des Kartonzuschnittes sieht vor, dass an den Außenkanten zweier einander gegenüberliegender erster Flächenabschnitte für die Umfangswandung jeweils ein Flächenelement anschließt, das sich mit dem jeweils anderen Flächenelement zu der zweiten Seitenwand ergänzt, und dass an jedem dieser Flächenelemente eine Bremslasche ausgebildet ist. An einen der zu diesen beiden ersten Flächenabschnitten rechtwinklig stehenden Flächenabschnitte schließt dann ein weiteres Flächenelement an, welches die beiden die zweite Seitenwand bildenden ersten Flächenelemente überdeckt und damit die beim Ausstanzen und Herausklappen der Bremslaschen entstehenden Öffnungen verschließt.

### Beschreibung der Zeichnungen

Ein Ausführungsbeispiel der Erfindung ist in der Zeichnung dargestellt und wird im folgenden näher beschrieben. Es zeigen:
- Fig. 1: in einer perspektivischen Darstellung eine fertige, mit einem Auswuchtgewicht-Gurt bestückte Kassette;
- Fig. 2: einen Kartonzuschnitt für die Herstellung einer Kassette; und
- Fig. 3A-3F: eine Faltanleitung für die Herstellung einer Kassette aus einem Kartonzuschnitt.

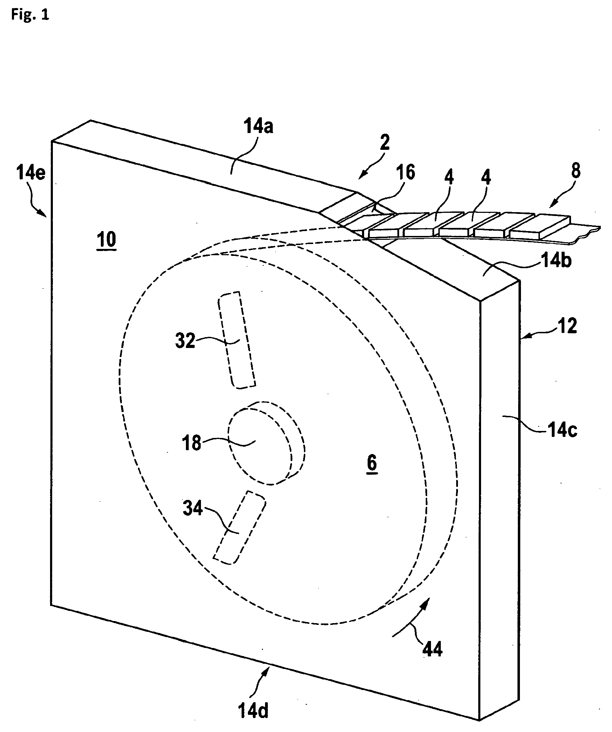

Die in Fig. 1 dargestellte Kassette 2 dient zur Aufnahme eines mit Auswuchtgewichten 4 bestückten Bandes- nachfolgend als Gurt 8 bezeichnet -, welches zu einer Gurtrolle 6 aufgerollt und bevorzugt einem nicht dargestellten Transport- und Ablängmechanismus, oder zur manuellen Entnahme zugeführt wird, in dem ein für das Auswuchten eines Rades erforderlicher Gurtabschnitt abgetrennt und an dem Rad befestigt wird. Die Kassette 2 weist zwei beabstandete, die Gurtrolle 6 zwischen sich aufnehmende Seitenwände 10 und 12 auf, von denen in der Fig. 1 nur die dem Betrachter zugewandte Seitenwand 10 zu sehen ist, sowie eine die Seitenwände 10, 12 miteinander verbindende Umfangswandung, die im Ganzen mit 14 bezeichnet wird, und die wegen der etwa quaderförmigen Ausgestaltung der Kassette 2 aus mehreren Umfangwandabschnitten 14a bis 14e besteht.

Wie die Fig. 1 erkennen lässt, ist eine der Ecken der Kassette 2 schräg abgeschnitten, wobei in dem diese schräg abgeschnittene Ecke bildenden Umfangswandabschnitt 14b eine Ausgabeöffnung 16 ausgebildet ist, durch die der Gurt 8 austritt.

Die Gurtrolle 6 ist auf einer im Inneren der Kassette ausgebildeten Nabe 18 zentriert und drehbar gelagert.

An der dem Betrachter zugewandten Seitenwand 10 sind zwei Bremslaschen 32, 34 ausgebildet, die sich schräg gegen die Gurtrolle 6 entgegen einer durch den Pfeil 44 gekennzeichneten Drehung der Gurtrolle 6 einspreizen und so eine solche Drehung und ein Zurückgleiten des Gurtes 8 in die Kassette verhindern. Die Bremslasche 32 kann radial nach außen soweit reichen, dass auch bei voller Gurtrolle die äußerste Windung, d.h. das bereits abgehobene Gurtende erfasst wird. Optional wird ein Zurückgleiten des Gurtendes durch den bevorzugt von der Ausgabeöffnung 16 ausgehend nach unten geneigten Umfangswandabschnitt 14b weiter reduziert, da die am Umfangswandabschnitt 14b anliegenden Gewichte hier bevorzugt nach unten ziehen.

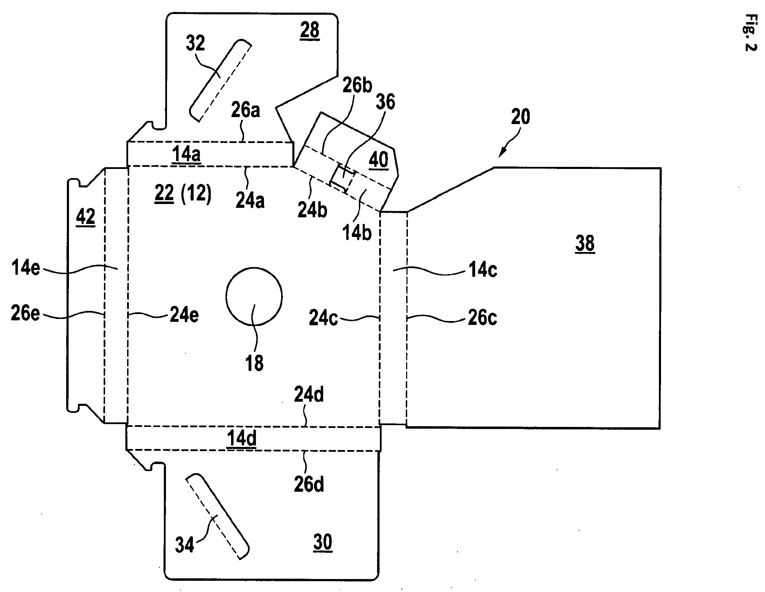

Fig. 2 zeigt einen Kartonzuschnitt 20 mit einer eine erste 12 der Seitenwände bildenden Basisfläche 22, an deren Außenkanten 24a bis 24e sich Umfangswandabschnitte 14a bis 14e anschließen.

An die Außenkante 26a des Umfangswandabschnittes 14a schließt sich ein Flächenelement 28 an, welches mit dem an die Außenkante 26d des Umfangswandabschnittes 14d anschließenden Flächenelement 30 die zweite Seitenwand 10 bildet. In den Flächenelementen 28 bzw. 30 ist jeweils eine Bremslasche 32 bzw. 34 so ausgestanzt, dass diese um eine zugehörige Faltkante aus der Ebene des zugeordneten Flächenelementes ausgeklappt werden kann.

An die schräge Außenkante 24b der Basisfläche 22 schließt sich ein Umfangswandabschnitt 14b an, in welchem eine Ausgabeöffnung 36 ausgestanzt ist.

Auf der Basisfläche 22 ist die Nabe 18 angeordnet, die beispielsweise aus einem kreisrunden Kartonzylinder mit einer im wesentlichen der Breite des Gurtes 8 entsprechenden Dicke gebildet ist.

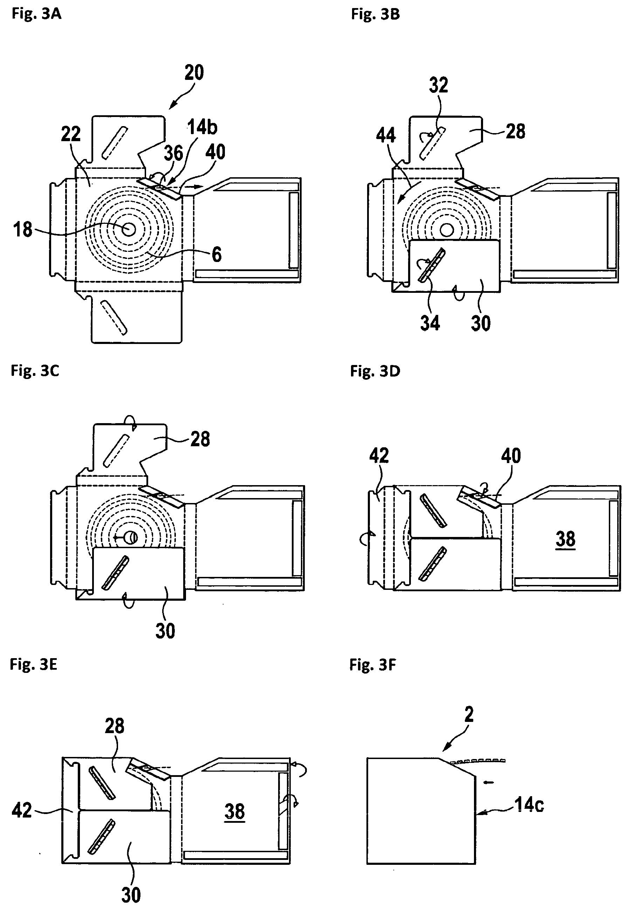

An der Außenkante 26c des Umfangswandabschnittes 14c schließt sich ein weiteres Flächenelement 38 an, dessen Funktion anhand der Fig. 3 näher erläutert wird.

Die an der Außenkante 26b des Umfangswandabschnittes 14b einerseits und an der Außenkante 26e des Umfangswandabschnittes 14e andererseits sich anschließenden Flächenelemente 40 bzw. 42 sind reine Kleberänder, wie ebenfalls anhand der Fig. 3 erläutert wird.

Die Fig. 3A bis 3F zeigen eine Anleitung, um einen Kartonzuschnitt 20 gemäß Fig. 2 zu einer Kassette 2 gemäß Fig. 1 zu falten, zu verkleben und mit einer Gurtrolle 6 zu bestücken.

Im ersten Schritt (Fig. 3A) wird eine Gurtrolle 6 auf die Nabe 18 aufgesetzt, der schräg verlaufende Umfangswandabschnitt 14b wird hochgeklappt und das von der Gurtrolle 6 abgezogene Gurtende wird durch die Ausgabeöffnung 36 hindurch gefädelt. Das als Kleberand dienende Flächenelement 40 wird umgefaltet, so dass es parallel zur Ebene der Basisfläche 22 liegt.

In nächsten Schritten werden die in den Flächenelementen 28, 30 ausgebildeten Bremslaschen 32, 34 so nach innen umgeklappt, dass sie sich nach Einklappen der Flächenelemente 28, 30 gegen eine Rückwärtsdrehung der Gurtrolle entsprechend dem Pfeil 44 spreizen; die Flächenelemente 28, 30 werden eingeklappt, so dass die Bremslaschen auf der Gurtrolle 6 aufliegen (Fig. 3B bis 3D).

In einem weiteren Schritt werden die an den Flächenelementen 38, 40 und 42 angeordneten Abdeckstreifen abgezogen, so dass die darunter befindlichen Klebeschichten frei werden, und sodann werden nacheinander das Flächenelement 42 und das Flächenelement 38 auf die die zweite Seitenwand bildenden Flächenelemente 28, 30 gefaltet und miteinander verklebt. Die Kassette 2 ist nunmehr für den Einsatz in einem Transport- und Ablängmechanismus bereit, wobei die Gurtrolle 6 an einer Rückwärtsdrehung und das aus der Ausgabeöffnung herausragende Gurtende an einem Zurückgleiten in die Kassette durch die Bremslaschen 32, 34 gehindert werden. Um das Gurtende für einen längeren Transport zusätzlich zu sichern, kann es beispielsweise an dem Umfangswandabschnitt 14c lösbar angeklebt werden.

### Bezugszeichenliste

- 2: Kassette
- 4: Auswuchtgewichte
- 6: Gurtrolle
- 8: Gurt
- 10: erste Seitenwand
- 12: zweite Seitenwand
- 14: Umfangswandung
- 14a-14e: Umfangswandabschnitte
- 16: Ausgabeöffnung
- 18: Nabe
- 20: Kartonzuschnitt
- 22: Basisfläche
- 24a-24e: Außenkanten
- 26a-26e: Außenkanten
- 28: Flächenelement
- 30: Flächenelement
- 32: Bremslasche
- 34: Bremslasche
- 36: Ausgabeöffnung
- 38: Flächenelement
- 40: Flächenelement
- 42: Flächenelement
- 44: Pfeil

## Patentansprüche

1. Behälter (2) mit einem mit Auswuchtgewichten (4) bestückten, aufgerollten, einen Gurt (8) bildenden Band und zur Ausgabe desselben, wobei der Behälter (2) als im wesentlichen allseitig geschlossene Kassette (2) mit zwei beabstandeten, die Gurtrolle (6) zwischen sich aufnehmenden Seitenwänden (10,12) sowie einer diese miteinander verbindenden, mit einer Ausgabeöffnung (16) für den Durchtritt des Gurtest (8) versehenen Umfangswandung (14) ausgebildet ist,
**dadurch gekennzeichnet, dass**
an der Innenseite wenigstens einer der Seitenwände (10,12) der Kassette (2) wenigstens eine an dem Gurt (8) bzw. der Gurtrolle (6) anliegende, schräg gegen eine Rückwärtsbewegung des Gurtes bzw. Rückwärtsdrehung der Gurtrolle sich einspreizende Bremslasche (32, 34) ausgebildet ist.

2. Behälter nach Anspruch 1,
**dadurch gekennzeichnet, dass**
an einer der Seitenwände der Kassette (2) zwei bezüglich der Achse der Gurtrolle (6) sich im wesentlichen diametral gegenüberliegende, radial ausgerichtete, an einer Seitenflanke der Gurtrolle (6) anliegende Bremslaschen (32, 34) angeordnet sind.

3. Behälter nach Anspruch 1 oder 2,
**dadurch gekennzeichnet, dass**
die Kassette (2) aus einem Kartonmaterial hergestellt ist, und dass die jeweilige Bremslasche (32, 34) durch Ausstanzen und Herausklappen aus der Ebene der jeweiligen Seitenwand gebildet ist.

4. Behälter nach Anspruch 3,
**dadurch gekennzeichnet, dass**
die Kassette (2) aus einem einzigen Kartonzuschnitt (20) gebildet ist, umfassend eine eine erste (10) der Seitenwände bildende, im wesentlichen rechteckige Basisfläche (22), an den Außenkanten (24a bis 24e) der Basisfläche jeweils anschließende, die Umfangswandung bildende Umfangswandabschnitte (14a bis 14e), und an den Außenkanten (26a bis 26e) dieser Umfangswandabschnitte anschließende, die zweite Seitenwand (12) bildende Flächenelemente (28, 30, 38).

5. Behälter nach Anspruch 4,
**dadurch gekennzeichnet, dass**
an der Innenseite der Basisfläche (22) mittig ein als Nabe (18) für die Gurtrolle (6) dienender kreisrunder Kartonzylinder mit einer im wesentlichen der Breite des Gurtes (8) entsprechenden Dicke (Höhe) angeordnet ist.

6. Behälter nach Anspruch 4 oder 5,
**dadurch gekennzeichnet, dass**
die Basisfläche (22) im Bereich einer ihrer Ecken abgeschrägt ist, und dass in dem zugeordneten Umfangswandabschnitt (14b) die Ausgabeöffnung (36) für den Durchtritt des Gurtes (8) ausgebildet ist.

7. Behälter nach einem der Ansprüche 4 bis 6,
**dadurch gekennzeichnet, dass**
an den Außenkanten zweier einander gegenüberliegender erster Umfangswandabschnitte (14a, 14d) jeweils ein Flächenelement (28, 30) anschließt, das sich mit dem jeweils anderen Flächenelement (30, 28) zu der zweiten Seitenwand (12) ergänzt, und dass an jedem dieser Flächenelemente (28, 30) eine Bremslasche (32, 34) ausgebildet ist.

8. Behälter nach Anspruch 7,
**dadurch gekennzeichnet, dass**
an einem zu den beiden ersten Umfangswandabschnitten (14a, 14d) rechtwinklig stehenden Umfangswandabschnitt (14c) ein Flächenelement (38) anschließt, welches die beiden die zweite Seitenwand bildenden Flächenelemente (28, 30) überdeckt.

9. Behälter nach einem der vorhergehenden Ansprüche,
**dadurch gekennzeichnet, dass**
ein Umfangswandabschnitt (14b) von einer Ausgabeöffnung (16) ausgehend nach unten geneigt ist um ein Zurückgleiten des Gurtes (8) weiter zu reduzieren.

## Claims

1. Container (2) with a rolled tape forming a belt (8) and being fitted with balancing weights (4), the container being provided for dispensing said tape, wherein the container (2) is formed as a substantially all-side closed cartridge (2) with two spaced sidewalls (10, 12) receiving the belt roll (6) between them, as well as with a circumferential wall (14) connecting said sidewalls to one another and being provided with a dispensing opening (16) for the passage of the belt (8),
**characterized in that**
at least one brake tab (32, 34) is provided at the inner side of at least one of the sidewalls (10, 12) of the cartridge (2), said brake tab being adjacent to the belt (8) or the belt roll (6), respectively, and spreading diagonally against a rearward movement of the belt or rearward rotation of the belt roll.

2. Container according to claim 1,
**characterized in that**
two brake tabs (32, 34) are arranged at one of the sidewalls of the cartridge (2), said brake tabs (32, 34) lying substantially diametrally opposite and radially aligned to one another relative to the axis of the belt roll (6) and being adjacent to the lateral side of the belt roll (6).

3. Container according to claim 1 or 2,
**characterized in that**
the cartridge (2) is made of a cardboard material, and that the respective brake tab (32, 34) is formed by punching and folding out of the plane of the respective side wall.

4. Container according to claim 3,
**characterized in that**
the cartridge (2) is formed of a single cardboard blank (20), comprising a first (10) substantially rectangular base plane (22) forming the side walls, circumferential wall segments (14a to 14e) adjacent to the respective outer edges (24a to 24e) of the base plane and forming the circumferential wall, and surface elements (28, 30, 38) being adjacent to the outer edges (26a to 26e) of said circumferential wall segments and forming the second side wall (12).

5. Container according to claim 4,
**characterized in that**
a circular cardboard cylinder is arranged centrally on the inner side of the base plane (22), said cardboard cylinder serving as a hub (18) for the belt roll (6) and having a thickness (height) substantially corresponding to the width of the belt (8).

6. Container according to claim 4 or 5,
**characterized in that**
the base plane (22) is beveled in the region of its corners, and that the dispense opening (36) for the passage of the belt (8) is formed in the associated circumferential wall segment (14b).

7. Container according to one of claims 4 to 6,
**characterized in that**
a surface element (28, 30) is adjacent to each of the outer edges of two mutually opposing first circumferential wall segments (14a, 14d), which surface element complements with the respective other surface element (30, 28) to the second side wall (12), and that a brake tab (32, 34) is formed at each of these surface elements (28, 30).

8. Container according to claim 7,
**characterized in that**
a surface element (38) abuts to a circumferential wall segment (14c) being orthogonally to one of the two first circumferential wall segments (14a, 14d), which surface element (38) covers the both surface elements (28, 30) forming the second side wall.

9. Container according to one of the preceding claims,
**characterized in that**
a circumferential wall segment (14b) is inclined downwardly from a dispensing opening (16) in order to further reduce a sliding-back of the belt (8).

## Revendications

1. Contenant (2) avec une bande enroulée formant une courroie (8) équipée de masses d'équilibrage (4) et servant à dévider celle-ci, lequel contenant (2) est conçu comme une cassette (2) fermée sensiblement de toutes parts avec deux parois latérales (10, 12) écartées recevant le rouleau de courroie (6) entre elles et avec une paroi de circonférence (14) reliant celles-ci entre elles et présentant une ouverture de sortie (16) pour le passage de la courroie (8), **caractérisé en ce qu'**il est prévu sur la face intérieure d'au moins une des parois latérales (10, 12) de la cassette (2) au moins une patte de freinage (32, 34) reposant sur la courroie (8) ou le rouleau de courroie (6) et se déployant à l'oblique pour empêcher un mouvement de recul de la courroie ou une rotation en arrière du rouleau de courroie.

2. Contenant selon la revendication 1, **caractérisé en ce qu'**il est prévu sur une des parois latérales de la cassette (2) deux pattes de freinage (32, 34) diamétralement opposées par rapport à l'axe du rouleau de courroie (6), orientées dans le sens radial et reposant sur un flanc latéral du rouleau de courroie (6).

3. Contenant selon la revendication 1 ou 2, **caractérisé en ce que** la cassette (2) se compose d'un matériau à base de carton et **en ce que** chaque patte de freinage (32, 34) est formée par découpe à l'emporte-pièce et pliage hors du plan de la paroi latérale correspondante.

4. Contenant selon la revendication 3, **caractérisé en ce que** la cassette (2) est formée par un carton découpé (20) qui comprend une surface de base (22) sensiblement rectangulaire, formant une première (10) des parois latérales, des parties de paroi de circonférence (14a à 14e) se raccordant aux bords extérieurs (24a à 24e) de la surface de base et formant la paroi de circonférence, et des éléments de surface (28, 30, 38) se raccordant aux bords extérieurs (26a à 26e) de ces parties de paroi de circonférence et formant la deuxième paroi latérale (12).

5. Contenant selon la revendication 4, **caractérisé en ce qu'**il est prévu au milieu de la face intérieure de la surface de base (22) un cylindre en carton circulaire servant de moyeu (18) pour le rouleau de courroie (6), dont l'épaisseur (hauteur) correspond pour l'essentiel à la largeur de la courroie (8).

6. Contenant selon la revendication 4 ou 5, **caractérisé en ce que** la surface de base (22) est biseautée au niveau de l'un de ses coins et **en ce que** l'ouverture de sortie (36) pour le passage de la courroie (8) est formée dans la partie de paroi de circonférence (14b) correspondante.

7. Contenant selon l'une des revendications 4 à 6, **caractérisé en ce qu'**un élément de surface (28, 30) complété par un autre élément de surface (30, 28) pour former la deuxième paroi latérale (12) se raccorde aux bords extérieurs de deux premières parties de paroi de circonférence (14a, 14d) se faisant face et **en ce qu'**une patte de freinage (32, 34) est formée sur chacun de ces éléments de surface (28, 30).

8. Contenant selon la revendication 7, **caractérisé en ce qu'**un élément de paroi (38) qui recouvre les deux éléments de paroi (28, 30) formant la deuxième paroi latérale se raccorde à une partie de paroi de circonférence (14c) formant un angle droit avec les deux premières parties de paroi de circonférence (14a, 14d).

9. Contenant selon l'une des revendications précédentes, **caractérisé en ce qu'**une partie de paroi de circonférence (14b) est inclinée à partir d'une ouverture de sortie (16) afin de réduire encore le glissement en arrière de la courroie (8).
